# FASCICULE DE BREVET EUROPEEN

(11) **EP 1 874 061 B1**
(45) Date de publication et mention de la délivrance du brevet: **12.08.2009**
(21) Numéro de dépôt: 07109837.0
(22) Date de dépôt: 08.06.2007
(51) Int. Cl.: H04N 7/58, H04N 7/173

(54) **Procédé de gestion de demandes d'accès à distance à des contenus multimedia**
Verfahren zur Verwaltung der Fernabfragen von multimedialen Inhalten
Method for managing remote requests for multimedia contents

(30) Priorité: 29.06.2006 FR 0605886
(43) Date de publication de la demande: 02.01.2008
(73) Titulaire: Thomson Licensing, 92100 Boulogne-Billancourt (FR)
(72) Inventeur: FLEURY, Jean-François, 92648, BOULOGNE Cedex (FR); STRAUB, Gilles, 92648, BOULOGNE Cedex (FR); HENRY, Jean-Baptiste, 92648, BOULOGNE Cedex (FR)
(74) Mandataire: Esselin, Sophie

(56) Documents cités:
- SEGARRA J; CHOLVI V: "Simulations on batching in video-on-demand transmissions" PROCEEDINGS OF THE INTERNATIONAL CONFERENCE ON COMPUTATIONAL SCIENCE (LECTURE NOTES IN COMPUTER SCIENCE 2660), juillet 2003 (2003-07), pages 453-462, XP002422191 Melbourne, Australia

## Description

### Domaine Technique

La présente invention concerne un procédé de gestion de demandes d'accès à distance à des contenus multimédias. Elle s'adresse notamment à des services de diffusion de vidéo à la demande, dits services de VoD (acronyme anglo-saxon pour *"Video on Demand").*

### Etat de la technique antérieur

Des services de diffusion en temps réel de vidéo sont actuellement proposés, qui s'appuient sur des réseaux de diffusion sur des lignes d'abonnés numérisées DSL, et des serveurs multimédias qui fournissent ces contenus en temps réel. Ils permettent à des utilisateurs de visionner à distance des contenus multimédias.

Parmi ces services, les services VoD sont plutôt des services "à la carte" : c'est l'utilisateur qui choisit un film, un documentaire ou autres dans une bibliothèque de contenus multimédias, pour le visionner à distance, au moment où il le demande, et ce de manière interactive, à la manière d'un lecteur de DVD ou d'un magnétoscope : pause, retour arrière, avance rapide...Avec un tel service de VoD, lorsqu'un utilisateur demande à visionner un contenu multimédia donné, un flux vidéo correspondant est diffusé sur le réseau de distribution, par un émetteur qui met en forme le flux de données multimédia qu'il reçoit du serveur, et l'envoie vers le coeur du réseau à destination du terminal utilisateur. A un moment donné, il y a autant de flux vidéo sur le réseau que de demandes d'utilisateurs servies. La bande passante totale du réseau est ainsi partagée entre les utilisateurs.

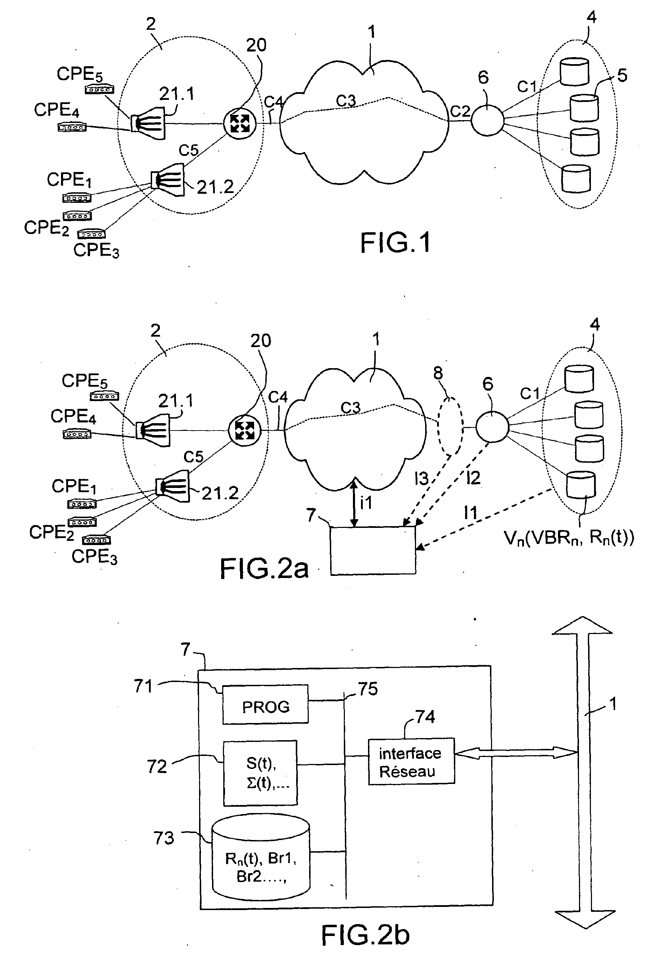

Un réseau de diffusion de données offrant un service de VoD suivant l'état de l'art est schématiquement représenté sur la figure 1, dans le contexte d'un accès par une ligne d'abonné numérisée DSL d'un utilisateur au réseau de diffusion. Il n'est donné qu'à titre d'exemple. D'autres types de connexion peuvent être envisagées entre l'utilisateur et le réseau de diffusion.

Dans un contexte de lignes DSL, un réseau de diffusion d'un service de VoD comprend habituellement un réseau de distribution 1, encore appelé coeur de réseau et auquel ont accès par un réseau d'accès 2, une pluralité d'utilisateurs (ou plus exactement de terminaux utilisateurs) CPE₁ à CPE₅. Le réseau d'accès 2 comprend des concentrateurs de lignes DSL et des équipements multiplexeurs d'accès qui sont habituellement appelés DSLAM dans la littérature technique spécialisée *(Digital Subscriber Line Access Multiplexer).* Dans l'exemple on a représenté un concentrateur 20 et deux DSLAMs notés 21.1 et 21.2. Un serveur 4 de distribution temps réel sur lequel sont stockés des contenus multimédias 5, ou qui les fournit, transmet différents flux de données sur le réseau de distribution 1 au moyen d'un émetteur 6 de flux de données à destination de différents utilisateurs, par exemple CPE₁ et CPE₄. Chaque flux de données correspond à un contenu demandé par un utilisateur déterminé et à destination de cet unique utilisateur : on est ainsi dans un mode de transmission point à point. L'émetteur met en forme les différents flux pour les envoyer sur le coeur de réseau en utilisant des techniques de multiplexage bien connues.

Le chemin de diffusion d'un contenu multimédia stocké sur le serveur jusqu'à un demandeur (terminal utilisateur) suit différents liens de communication : c1 entre le serveur 4 et l'émetteur 6; c2 entre l'émetteur et le coeur de réseau 1; c3 dans le coeur de réseau lui-même; c4 en sortie du coeur de réseau vers le concentrateur 20; c5, entre ce concentrateur et un multiplexeur DSLAM 20. Le plus faible de ces liens détermine la bande passante du réseau de diffusion, c'est à dire le nombre maximal de bits par unité de temps que le réseau de diffusion peut accepter, par exemple 340 Mbit/s.

Le serveur 4 contient sous forme de fichiers numériques, des flux de données numériques correspondant à chacun des contenus multimédia proposé par le service de VoD concerné. Ces fichiers résultent de manière connu d'un encodage des données audio et vidéo selon la norme MPEG (acronyme anglo-saxon pour *"Moving Picture Expert Group").* Sous cette norme, différents types d'encodage sont proposés. Dans les services de VoD, c'est un encodage à débit constant qui est utilisé, avec un taux de compression lié à l'algorithme de compression utilisé. Le flux de données numérique qui résulte d'un tel codage, a un débit qui est constant sur la durée du flux, et identique pour tous les contenus (seule la durée varie). La valeur R constante de ce débit est fonction des caractéristiques du codage utilisé. Une valeur répandue est 4 mégabits par seconde.

Le réseau de diffusion Vod peut ainsi admettre au maximum N utilisateurs à un instant t, égal à la partie entière du résultat de la division de la bande passante du réseau par le débit R des flux de données multimédia. Ce nombre N d'utilisateurs qui peuvent être servis à un instant donné est donc limité par la capacité du réseau et la technique de codage.

La capacité des réseaux est contrainte par la technologie des liens de communication utilisés et ne peut augmenter indéfiniment. Le nombre d'utilisateurs d'un service de VoD est donc nécessairement limité ou bien le service dégradé. Notamment, dans certains créneaux horaires, la demande de service peut être forte et par conséquent un certain nombre de demandes ne seront pas servies.

Dans l'invention on a cherché une voie d'amélioration du service dans une optimisation des débits des flux de données. Notamment on s'est intéressé à des techniques de codage à débit variable dites VBR (*Variable Bit Rate),* qui utilisent en particulier des propriétés des images pour adapter le taux de compression au cours du temps, et améliorer ainsi la qualité de la vidéo diffusée. Ces techniques sont notamment utilisées dans les services de diffusion de vidéo en continu, dite diffusion broadcast. La diffusion dite *"broadcast"* est un service qui fonctionne à l'initiative du diffuseur de contenus multimédia : un contenu, par exemple un film, est diffusé à un moment donné, à destination de tous les utilisateurs. Les données ne sont envoyées qu'une seule fois et dupliquées sur les routeurs du réseau, en fonction des chemins menant aux utilisateurs, selon un mode de transmission dit multipoint. Chaque utilisateur a la possibilité de visualiser à distance la séquence diffusée, à l'horaire imposé par le diffuseur, sans aucune interactivité. Dans ces services de diffusion, le taux d'occupation de la bande passante du réseau de distribution est indépendant du nombre d'utilisateurs. Il ne dépend que du nombre de services proposés à un moment donné, ce qui est connu. Tous les points de routage sont connus. Ces services peuvent alors être multiplexés, de façon statistique, avec une garantie que la bande passante du réseau ne sera pas dépassée.

Ces techniques de codage à taux variable appliquées à des contenus multimédias ne peuvent cependant pas s'appliquer directement aux services de VoD, sans poser un problème de gestion inhérent au fonctionnement de ces services à la carte : le partage de la bande passante entre les utilisateurs. En effet, contrairement - à ce qui se passe en diffusion "broadcast", l'émetteur qui envoie les flux de données multimédia sur le coeur de réseau, ne peut pas utiliser une gestion statistique des flux transmis: il ne peut pas prévoir quels flux vont être demandés ni à quels moments, puisque ces flux dépendent directement des demandes des utilisateurs. En outre comme chaque flux a un profil de débit variable, qui lui est propre, l'émetteur ne dispose d'aucune information prédictive sur les flux et leurs débits qui devraient être transmis sur le réseau. Dans un service de VoD, l'émetteur n'est donc pas à même de gérer de manière simple et statistique, l'évolution du trafic sur le coeur de réseau. Il ne connaît à l'avance ni les points de routage dans le réseau, puisqu'il ne sait pas qui va faire une demande, ni le débit de données, puisqu'il ne sait pas quel contenu va être demandé. L'utilisation de flux codés à débit variable pose donc un problème de gestion des demandes de services VoD, qui va au-delà de la simple gestion du nombre N d'utilisateurs connectés comme dans l'état de l'art, et qui ne peut pas utiliser des mécanismes statistiques comme dans les services de diffusion de type "broadcast". Le document : Segarra J; Cholvi V: "Simulations on batching in video-on-demand transmissions" Proceedings of the International Conférence on Computational Science (Lecture Notes in Computer Science 2660), juillet 2003, pages 453-462, Melbourne, Australia, compare plusieurs méthodes de transmission de flux de vidéo à la demande.

### Résumé de l'invention

L'invention concerne un procédé de gestion de demandes d'accès à distance à des contenus multimédias, qui permet une gestion optimale de l'utilisation de la bande passante du réseau de diffusion avec une utilisation de flux de données encodés à débit variable.

Le profil de débit de chacun des contenus multimédia proposé à la distribution est une caractéristique de l'encodage MPEG de type VBR réalisé pour le contenu multimédia considéré. C'est une information que l'on peut donc enregistrer, par exemple sous forme d'un fichier texte, en même temps que l'encodage du contenu multimédia est effectué.

Selon l'invention, on exploite les profils de débit de chacun des contenus multimédias proposés par le serveur, pour mettre en oeuvre une gestion non statistique mais contrôlée de l'utilisation de la bande passante du réseau de distribution. Les profils de débit sont utilisés pour calculer le profil total des flux de données en cours de diffusion sur le réseau, et le comparer au profil du nouveau flux demandé, par rapport à la bande passante du réseau de diffusion. Cette comparaison est effectuée en faisant une ou plusieurs hypothèses d'une insertion instantanée et/ou retardée du nouveau flux dans le flux multiplex en cours, de manière à exploiter au mieux les caractéristiques des profils, notamment la position des pics et des creux de débit dans les profils du multiplex et du nouveau flux. Une gestion selon l'invention permet à tout moment d'optimiser l'utilisation de la capacité du réseau pour servir au mieux les différents utilisateurs. Le service est ainsi plus souple et permet d'augmenter le nombre d'utilisateurs qui peuvent y accéder.

L'invention concerne donc un procédé de gestion d'une demande d'accès à distance à un contenu multimédia parmi une pluralité de contenus multimédias selon la revendication 1.

L'invention concerne aussi un appareil selon la revendication 9.

L'invention concerne aussi un système de diffusion de contenus multimédia à la demande selon la revendication 10.

### Description sommaire des dessins

D'autres avantages et caractéristiques de l'invention sont détaillés dans la description suivante en référence aux dessins illustrés, donnée à titre d'exemple non limitatif. Dans ces dessins :
- la figure 1 déjà décrite, illustre un réseau de diffusion de contenus multimédias à partir d'un serveur multimédia, permettant d'offrir un service de VoD;
- la figure 2a illustre un réseau de diffusion comprenant un contrôleur de gestion de demandes d'accès à distance selon l'invention ;
- la figure 2b montre un exemple d'architecture d'un tel contrôleur de gestion;
- les figures 3a et 3b illustrent chacune respectivement un exemple de gestion d'un nouveau flux de données, en considérant une insertion instantanée, respectivement retardée;
- la figure 4 est un organigramme général d'un algorithme de détermination d'un instant d'insertion d'un nouveau flux selon l'invention;
- les figures 5a et 5b illustrent un principe de lissage de débit appliqué en sortie de l'émetteur; et
- la figure 6, un exemple d'application de ce principe dans un procédé de gestion selon l'invention;
- la figure 7 est un organigramme détaillé d'un algorithme de détermination d'un instant d'insertion d'un nouveau flux;
- la figure 8a représente différents profils du débit S(t) total des flux en cours de distribution correspondant à des périodes d'échantillonnages différentes;
- la figure 8b représente différents profils du débit Rₙ(t) d'un nouveau flux demandé correspondant à des périodes d'échantillonnages différentes;
- la figure 9 illustre un premier mode de réalisation d'une gestion selon l'invention, utilisant les différents profils illustrés sur les figures 8a et 8b; et
- les figures 10a et 10b illustrent un autre mode de réalisation d'une gestion d'admission de demande selon l'invention.

### Description détaillée

Dans un souci de clarté, on utilise les même références pour les éléments communs aux figures. Par ailleurs, dans la suite, on entend par :
- flux demandé, ou nouveau flux, le flux correspondant à une demande d'accès à distance à un contenu multimédia donné. Ce flux demandé peut en particulier être une nouvelle demande d'un utilisateur, ou une demande de reprise de lecture après une pause, auquel cas le flux à considérer est la partie restante du flux, non encore diffusée. Ce peut être un flux correspondant à une avance rapide ou un retour rapide. Dans tous les cas, il y correspond un flux de données déterminé. Par exemple, pour une lecture normale, le flux correspond à une transmission de 25 ou 30 images par seconde. Pour une avance rapide, le flux correspond par exemple à une transmission de 1 image toutes les 12 images. Dans la suite on ne fait pas de distinction entre ces différentes demandes liées à des fonctionnalités de lecture offertes par le service.
- demande d'accès à distance à un contenu multimédia, une demande de service VoD, émise par un utilisateur, soit pour lire un contenu multimédia, soit pour reprendre la lecture d'un contenu multimédia après une pause, soit tout autre type de lecture offerte par le service VoD, comme on peut également les trouver sur un magnétoscope ou un lecteur de DVD.

Un réseau de diffusion de contenus multimédias à la demande, comprenant un contrôleur de gestion des demandes, pour mettre en oeuvre un procédé de gestion optimisé selon l'invention est illustré sur la figure 2a. Dans ce réseau, la partie système de diffusion des contenus multimédias à la demande comprend en plus du serveur 4 et de l'émetteur 6, un contrôleur de gestion 7, pour gérer de façon optimisée les nouvelles demandes. Dans l'exemple, un lisseur de débit 8 disposé entre l'émetteur 6 et le coeur de réseau 1 est en outre prévu. Cette ressource optionnelle permet d'apporter une souplesse dans la gestion de la capacité du réseau, comme il sera vu plus loin. Le serveur 4 fournit les contenus multimédias Vₙ offerts à la diffusion, sous forme de flux numériques à débit variable VBRₙ. A chacun de ces flux VBRₙ, le serveur 4 peut faire correspondre un profil de débit Rₙ(t), qui donne le débit instantané à chaque instant t de la durée Tn de diffusion du contenu multimédia associé Vₙ. Ce profil Rₙ(t) peut être extrait au moment du codage du contenu multimédia Vₙ et stocké sur le serveur 4, par exemple sous forme d'un fichier texte, en même temps que le flux de données encodé résultant, VBRₙ.

Le contrôleur de gestion 7 peut être un appareil séparé, connectable au réseau de distribution par une interface réseau i1, comme illustré sur la figure. Il peut encore être intégré au serveur 4. Il peut établir des communications avec les autres ressources. En particulier il peut recevoir via l'interface réseau i1, des informations du serveur 4, notamment les profils Rₙ(t) des contenus multimédias Vₙ, de l'émetteur 6 ou du lisseur 8 de débit, en établissant des communications correspondantes I1, I2, I3.

Le contrôleur 7 a notamment pour fonctions de détecter les nouvelles demandes d'accès, et d'y donner suite ou de les refuser, en fonction de la capacité courante du réseau de diffusion. Plus particulièrement, à chaque nouvelle demande, ou pour au moins une partie d'entre elles, il détermine en fonction du débit total des flux en cours de transmission, s'il est possible d'insérer le flux demandé correspondant dans le flux multiplex en cours, soit instantanément, soit en appliquant un retard déterminé, compte-tenu du débit maximum admissible sur le réseau. Pour assurer ces fonctions, le contrôleur de gestion 7 comprend des ressources de traitement numérique et une interface réseau. Un exemple d'architecture correspondante est illustrée sur la figure 2b, comprenant différentes ressources qui communiquent par un bus interne référencé 75, et notamment un processeur 71 permettant l'exécution des traitements, en particulier d'un algorithme de détermination d'un instant d'insertion possible pour le nouveau flux, une mémoire de travail 72 associée pour le stockage de données tels que le débit total des flux en cours, noté S(t) ou la somme Σ(t) de ce débit total avec le profil de débit Rₙ(t) du nouveau flux, ou différentes données concernant les flux en cours de diffusion, et une mémoire de stockage 73, tel qu'un disque, permettant notamment de stocker les profils Rₙ(t) des contenus multimédias offerts par le service, des données caractéristiques du réseau, tel que des valeurs de seuil Br1, Br2 représentatives de la capacité du réseau, des paramètres liés au lisseur de données 8... Le contrôleur 7 possède en outre une interface référencée 74 avec le réseau 1 de distribution de contenu.

A chaque instant, le contrôleur 7 sait quels flux de données sont en cours de transmission sur le réseau. Il peut déterminer le profil de débit total S(t), par sommation des profils de débit Rₙ(t) de ces différents flux. Ce calcul est de préférence effectué par avance, en temps réel. Il peut être calculé sur une grande durée, typiquement sur la plus grande durée de diffusion restante parmi les flux du multiplex. Le contrôleur 7 dispose ainsi à tout moment du profil temps réel du multiplex. Ce calcul suppose pour chaque flux en cours de transmission, que le contrôleur 7 garde en mémoire, différentes informations telles que le top départ de l'insertion du flux dans le multiplex, l'instant auquel une pause de lecture a été faite... L'obtention de ces différentes informations se fait de manière habituelle suivant les échanges d'information de services VoD entre les différentes ressources du réseau et ne sera donc pas détaillée plus avant. On notera que l'on peut très bien envisager de ne faire le calcul du profil S(t) du multiplex qu'à chaque fois qu'une demande d'accès à distance est reçue. Les ressources de traitement du contrôleur seront moins utilisées, mais le traitement temps réel est alors moins optimum.

Quand une nouvelle demande est émise par un utilisateur, le contrôleur de gestion 7 détermine s'il est possible d'insérer le flux demandé, dans le flux multiplex en cours, soit instantanément soit avec un certain retard déterminé, en fonction notamment du profil S(t) du flux multiplex en cours, et d'un seuil Br1, représentatif de la capacité du réseau (fonction des caractéristiques des liens de communication du réseau de diffusion considéré). Cette détermination peut être faite en considérant différentes valeurs possibles du retard, entre une valeur nulle (insertion instantanée) et une valeur maximale admissible, c'est à dire une valeur de retard qui soit sans incidence pour l'utilisateur. Pour chaque valeur, on vérifie dans la fenêtre d'insertion du flux demandé correspondante, si le débit total émis, compte tenu des flux en cours, est inférieur ou égal au seuil. Cette vérification peut être effectuée suivant différentes méthodes. Notamment elle peut être basée sur un calcul de débit cumulé du débit du nouveau flux avec celui du flux en cours, ou sur un calcul d'un profil différence, entre le débit maximal admissible sur le réseau et le débit en cours (calcul de la bande passante disponible), et une comparaison de ce profil différence avec le profil du nouveau flux.

Dans le cas d'une insertion retardée, d'une valeur ΔT non nulle, positive, l'utilisateur devra attendre ce délai supplémentaire ΔT avant de pouvoir visionner le contenu qu'il a demandé. Le retard maximal possible est déterminé pour être sans incidence sur le service. Typiquement un retard de quelques centaines de millisecondes à 1 seconde n'a pas d'incidence sur l'utilisateur, et ne dégrade donc pas le service.

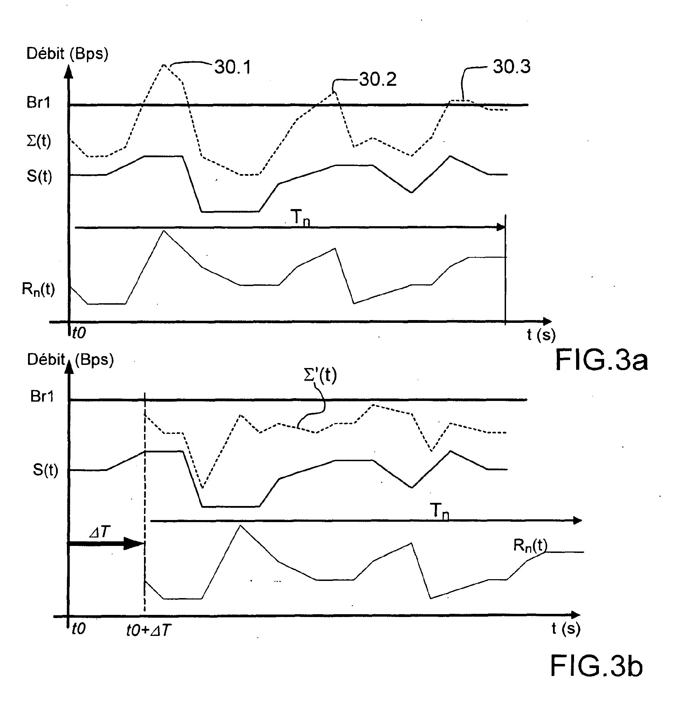

Un mode de détermination d'un instant d'insertion conforme à l'invention va maintenant être expliqué pour illustrer l'invention. Il est basé sur une méthode de cumul du profil S(t) avec le profil du nouveau flux. Ce mode est illustré en relation avec les figures 3a et 3b.

On considère que la demande est reçue à un instant t0 par le contrôleur 7. A cette demande d'accès correspond un flux de données VBRₙ, et un profil de débit correspondant. Ce profil est connu du contrôleur 7 : c'est une des données qu'il contient en mémoire de données 73, ou bien il peut l'obtenir par le serveur 4. Ce profil a une largeur Tn, correspondant à la durée de diffusion. Le résultat de la sommation de ce profil Rₙ(t) avec le débit total S(t) du flux multiplex en cours dépend du moment où l'on insère le flux demandé dans le flux multiplex.

La figure 3a illustre l'hypothèse d'une insertion instantanée du flux demandé, c'est à dire une insertion à t0. Par simplification on considère que l'instant t0 auquel on a reçu la demande et l'instant d'insertion instantanée du flux dans le multiplex coïncident. En réalité il y a des retards incompressibles dont il faudra en pratique tenir compte dans les calculs.

Le contrôleur effectue la sommation du profil total S(t) sur la fenêtre [t0, t0+Tn], avec le profil Rₙ(t), en faisant coïncider le début du profil Rₙ(t), avec t0 : Σ(t)=S(t)+Rₙ(t), pour t ∈ [t0, t0+Tn]. Sur cette fenêtre, le contrôleur compare ce profil E(t) au seuil Br₁ de débit maximum admissible sur le réseau. Dans l'exemple illustré, il détecte trois zones temporelles 30.1, 30.2, 30.3 dans lesquelles ce seuil est dépassé. L'insertion instantanée du flux demandé dans le multiplex en cours n'est donc pas possible.

La figure 3b illustre l'hypothèse d'une insertion retardée du flux demandé, d'une valeur ΔT c'est à dire une insertion à t0+ΔT. Le contrôleur effectue la sommation du profil total S(t) pris sur la fenêtre [t0+ΔT, t0+ΔT +Tn], avec le profil Rₙ(t), en faisant coïncider le début du profil Rₙ(t), avec t0+ΔT. On obtient le débit cumulé Σ(t)=S(t)+Rₙ(t), pour t ∈ [t0, t0+Tn]. Sur cette fenêtre, le contrôleur compare ce profil Σ(t) au seuil Br₁ de débit maximum admissible sur le réseau. Dans l'exemple illustré, on voit alors que la courbe cumulée Σ(t) obtenue ne montre pas de zones de dépassement du seuil : sur la fenêtre d'insertion [t0+ΔT, t0+ΔT+Tn], les creux et les pics des deux profils S(t) et Rn(t) se compensent judicieusement. La demande d'accès va alors être admise et le flux demandé sera inséré à l'instant t0+ΔT au flux de demandes en cours. De manière générale, dans l'étape de détermination d'un instant d'insertion, il s'agit ici d'exploiter les pics et les creux des deux courbes de débit S(t) et Rₙ(t) pour chercher un instant optimum d'insertion du flux demandé, en sorte que l'on reste en tout point à un niveau de débit total au moins inférieur ou égal au seuil Br1. En d'autres termes, on cherche la meilleure configuration d'insertion du profil, si elle existe, pour insérer le flux demandé dans le flux de données en cours.

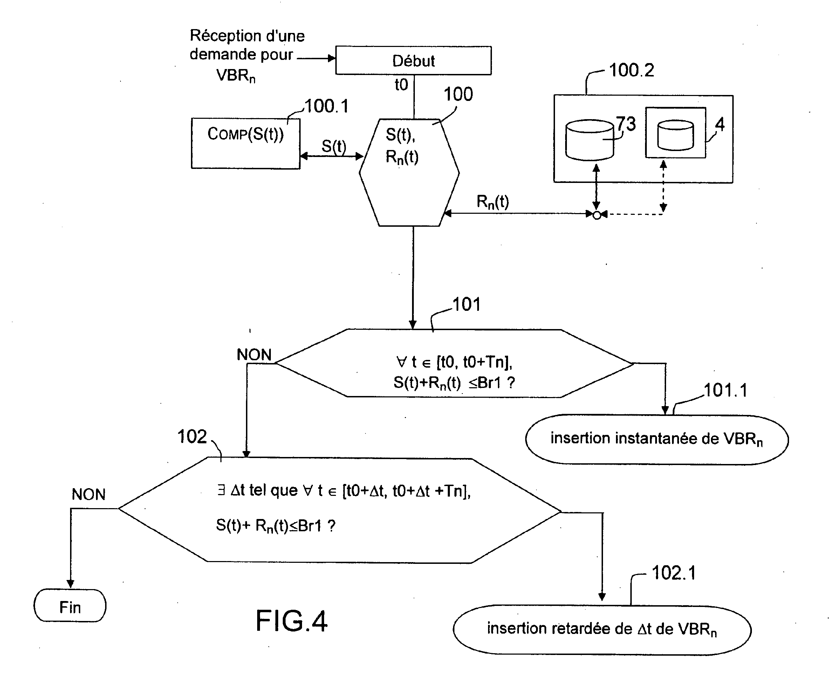

Comme illustré sur la figure 4, un procédé de gestion d'une demande d'accès à distance selon l'invention comprend les étapes suivantes :
- étape 100 d'initialisation comprenant une étape 100.1, pour établir et/ou aller chercher le profil de débit temps réel S(t) du flux multiplex, établi soit à la demande, soit en tâche de fond temps réel (tâche COMP (S(t)); une étape 100.2, pour chercher le profil Rₙ(t) du flux demandé, soit en mémoire 73 du contrôleur, soit en mémoire du serveur 4;
- étape 101 de vérification de la condition de seuil Br1 : si en faisant une hypothèse d'insertion instantanée, le profil de débit cumulé Σ(t) est en tous points en dessous du seuil Br1 sur la fenêtre d'insertion [t0, t0+Tn], accepter la demande et insérer instantanément le flux demandé dans le multiplex (étape 101.1).
- étape 102 : si il existe une ou des zones de dépassement, chercher une valeur de retard ΔT admissible, pour laquelle le profil cumulé soit en tous points inférieur ou égal au seuil Br1 sur la fenêtre d'insertion correspondante [t0+ΔT, t0+ΔT+Tn], pour admettre la demande et insérer le flux avec le retard ainsi déterminé (étape 102.1).

Un perfectionnement de la gestion des demandes d'accès permet une tolérance accrue dans l'admission des demandes. Ce perfectionnement suppose que le réseau de diffusion comprenne entre la sortie de l'émetteur 6 et le réseau de distribution 1, des moyens 8 de lissage de débit, comme illustré sur la figure 2a.

Des moyens de lissage sont utilisés de manière connue dans des systèmes de diffusion vidéo sur des réseaux de type ATM *(Asynchronous Transfer Mode),* c'est à dire où la transmission des paquets de données sur le réseau est du type asynchrone, avec un système d'écoute du réseau, contrairement aux services comme les services de VoD qui sont basés sur des transmissions synchrones des paquets de données. La technique de lissage permet d'admettre un multiplex de flux de données dont le débit dépasse localement en certains points le seuil de débit maximal du réseau de diffusion. Le lisseur a alors pour fonction d'étaler les paquets de données dans ces zones de dépassement, c'est à dire de faire passer des paquets de données vidéo un peu avant ou un peu après le moment où ils auraient dû être normalement envoyés. Selon le lissage employé, on tolère plus ou moins de dépassement sur une période de temps, et des hauteurs et durées de dépassement limitées.

Dans l'invention, on utilise les caractéristiques d'un lisseur 8 placé en sortie de l'émetteur 6, pour obtenir une tolérance, une souplesse dans l'application du critère de dépassement du seuil Br1 du réseau de diffusion.

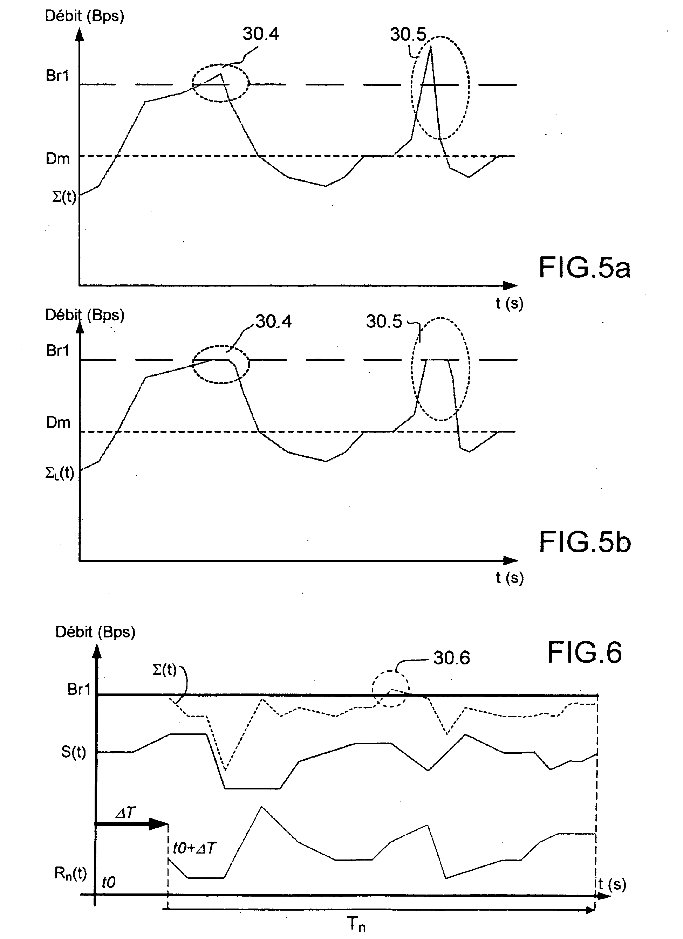

Un exemple de mise en oeuvre de ce perfectionnement est illustré sur les figures 5a et 5b. Sur la figure 5a, on a représenté à titre d'exemple, un profil de débit cumulé Σ(t). Ce débit cumulé varie autour d'une valeur moyenne Dm. Il comporte des pics qui dépassent le seuil Br1, dans l'exemple dans chacune des zones temporelles 30.4 et 30.5. Ces dépassements dans les zones 30.4 et 30.5 seront lissés par le lisseur 8 de débit (*"rate shaper"*)*.* On obtient la courbe lissée Σ_{L}(t) illustrée sur la figure 5b, qui correspond au débit de données obtenu en sortie du lisseur : localement, dans ces zones, on observe un étalement des paquets de données.

La tolérance dans la gestion des admissions des demandes va dépendre en pratique des caractéristiques du lissage mis en oeuvre, qui peuvent dépendre notamment de contraintes techniques. Notamment, le lissage introduit de la gigue dans le flux vidéo, gigue qui doit rester dans des limites supportées par les équipements de décodage vidéo, ce qui se traduit en particulier par une plage de pourcentage de dépassement relative à une durée de dépassement. Ces données pourront être transmises par le lisseur 8 et mémorisées par le contrôleur 7 en mémoire de données 73 (figure 2b).

En pratique, l'utilisation des possibilités offertes par un lissage, quand il est prévu dans le réseau de diffusion, va se traduire par une étape supplémentaire pour décider si une demande peut être acceptée ou non. Dans l'exemple illustré sur la figure 6, on prend comme hypothèse que la courbe de débit cumulée présente localement, dans une zone 30.6, un léger dépassement local du seuil Br1. Si ce dépassement répond aux contraintes du lisseur 8 en termes notamment de hauteur et durée du dépassement, le contrôleur de gestion va accepter l'insertion du flux demandé, dans l'exemple avec un retard ΔT à l'insertion.

Un procédé de gestion des demandes selon l'invention permet ainsi une gestion non statistique mais contrôlée à tout moment, du débit des flux de données en cours sur le réseau de diffusion ainsi qu'une optimisation du nombre d'utilisateurs du service de VoD servis simultanément.

En pratique, un algorithme de détermination d'un instant d'insertion est appelé par le contrôleur 7 à chaque nouvelle demande, ou au moins pour une partie d'entre elles. En effet, en deçà d'un certain nombre d'utilisateurs en ligne, on n'a pas de problème de capacité de réseau, et il n'est pas utile de mettre en eouvre le procédé de l'invention pour ces demandes.

L'instant d'insertion peut être déterminé par paliers successifs, en utilisant une boucle de détermination et un pas de boucle associé. La boucle est initialisée avec un retard Δti nul (correspondant à une hypothèse d'insertion instantanée -figure 3a) et on vérifie la condition de seuil Br1. Si la condition de seuil n'est pas vérifiée, on incrémente le retard Δti de la valeur m du pas de boucle, et on vérifie la condition de seuil et ainsi de suite, jusqu'à trouver une valeur de retard Δti pour laquelle la condition est vérifiée, ou avoir effectué un nombre déterminé de boucles correspondant à un retard maximum admissible.

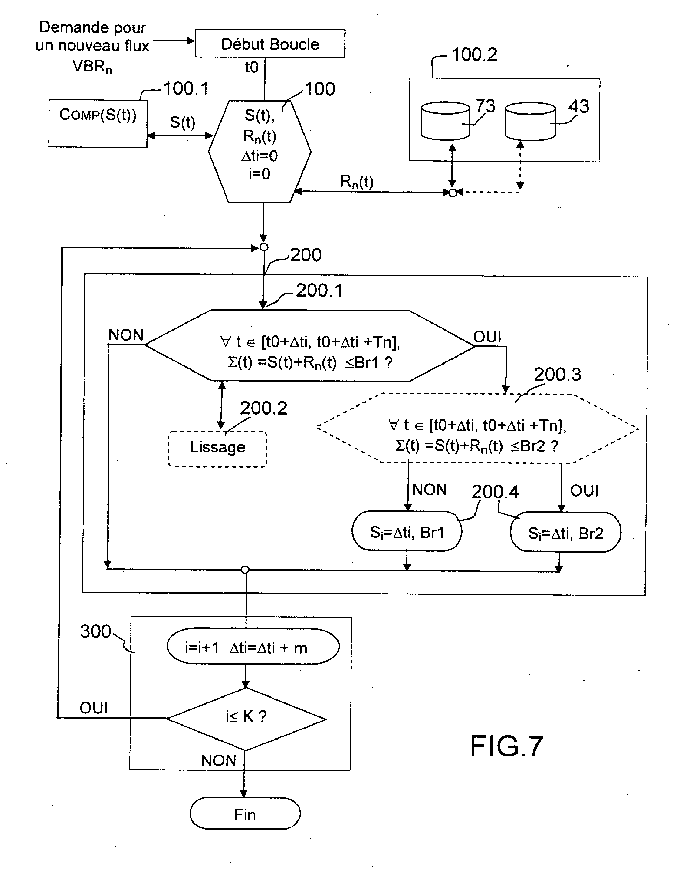

Des perfectionnements peuvent être intégrés à cet algorithme. Notamment, même si une insertion instantanée est possible, on peut prévoir de vérifier si il existe des valeurs de retard pour lesquelles l'insertion est également possible, et choisir une insertion avec celui des retards déterminés qui permet de satisfaire une contrainte plus forte en terme de seuil de capacité de réseau, typiquement pour lequel le débit cumulé serait en tous points de la fenêtre d'insertion inférieur ou égal à un seuil Br2 inférieur à Br1, par exemple de l'ordre de 5%. Dans ce cas, et comme par exemple illustré sur la figure 7, le contrôleur initialise (étape 100) une boucle 200 de détermination d'un instant d'insertion : compteur i=0, retard Δti =0, obtention des profils S(t) (étape 100.1) et Rn(t) (étape 100.2) ; et effectue K fois cette boucle, en incrémentant le compteur i d'une unité (i=i+1) et le retard d'un pas de boucle m (Δti=Δti+m) entre chaque boucle (étape 300).

A chaque boucle 200, le contrôleur applique différentes étapes :
- étape 200.1 : détermination si pour le retard considéré Δti, la condition de seuil Br1 est vérifiée, le cas échéant avec lissage (étape 200.2).
- étape 200.3 : si la condition à l'étape 200.1 est vérifiée, détermination si la condition plus contrainte de seuil Br2 est vérifiée ; pour compléter (étape 200.4) en fonction des résultats de la boucle i, une table de solutions Si possibles, indiquant la valeur du retard Δti (nul, ou positif) à l'insertion et la contrainte de seuil associé : Br1, ou Br2 qui est vérifiée.

Par exemple, on obtient les trois solutions suivantes: S0(Δt0=0;Br1) à i=0; S2(Δt2=2.m;Br2) à i=2 ; S5(Δt5=5.m;Br2) à i=5. Le contrôleur 7 pourra alors préférer la solution S2, aux solutions S0 et S5: dans la fenêtre d'insertion correspondante, elle laisse plus de bande passante disponible que la solution S0, ce qui peut faciliter l'admission d'une autre demande future ; et elle impose un retard à l'insertion moindre que la demande S5.

Dans un exemple pratique la valeur m du pas de boucle peut-être de l'ordre de 50 millisecondes et le retard maximum admissible pour un utilisateur, sans dégradation de service notable, de l'ordre de 500 millisecondes à 1 seconde, ce qui donne un nombre K maximum de boucles de l'ordre de 10 à 20.

Des modes de réalisation de l'étape de vérification performants en termes de temps de calcul et de consommation mémoire peuvent être implémentés, en particulier pour le traitement des profils de débit et leur comparaison au seuil. Il est utile à ce stade de préciser quelques notions sur les profils de débit. Le profil de débit d'un flux donne l'évolution en fonction du temps du débit de données de ce flux. La largeur du profil correspond à une durée de diffusion de ce flux. S'agissant de données multimédias, il y a typiquement 25 à 60 trames vidéo par seconde, suivant le mode vidéo (entrelacé ou progressif), une trame correspondant à une image ou une demi-image (mode entrelacé), et le format (PAL, NTSC,...). Une représentation d'un profil de débit peut donc être un ensemble de données, par exemple dans un fichier texte. Chaque donnée du fichier est un échantillon de débit du flux pour un instant d'échantillonnage donné. L'échantillonnage est tel que sur chaque période d'échantillonnage, c'est la valeur de débit la plus élevée qui est retenue comme valeur de l'échantillon.

On a ainsi une suite de valeurs, par exemple 1, 5, 8, ... mégabits par seconde (Mbs), pour chaque instant d'échantillonnage t0, t0+Te, t0+2.Te....Un échantillonnage à la seconde apparaît comme une valeur réaliste.

Le contrôleur de gestion a accès au profil de chacun des contenus proposés par le service. Il utilise ces profils comme il vient d'être décrit pour calculer le profil du débit temps réel du flux multiplex en cours, en lisant les profils de chacun des flux qui le composent, et en les cumulant en tenant compte du début de chacun des flux dans ce multiplex, c'est à dire en tenant compte pour chacun des flux du moment où ils ont été insérés.

A la réception d'une demande d'accès à distance à un contenu multimédia donné, le contrôleur va lire le profil de débit du flux demandé. Il doit alors vérifier en tout point, c'est à dire à chaque instant d'échantillonnage, si la somme des valeurs de débit à cet instant d'échantillonnage dans les deux profils est inférieure ou égale au seuil. Pour des contenus multimédias dont la durée de diffusion peut atteindre par exemple deux à trois heures, cette vérification point à point peut se révéler quelque peu fastidieuse.

Au lieu d'un unique profil, par exemple un profil élaboré à la seconde (soit un échantillon par seconde), on prévoit dans un premier perfectionnement de l'invention, l'utilisation pour chaque flux d'une pluralité de profils obtenus pour des périodes d'échantillonnage différentes, d'une période plus longue, qui va donner donc le moins d'échantillons, à une période plus courte qui va en donner beaucoup plus. On procède ainsi à la fois pour les contenus multimédias distribués par le serveur, et pour le multiplex de flux de données. On introduit ainsi une notion d'échelle, correspondant à la période d'échantillonnage considérée. Ceci permet de vérifier la condition de débit par approches successives, au moyen d'une boucle itérative, en sélectionnant la plus grande échelle tout d'abord, puis en affinant la recherche sur des zones de dépassement éventuelles détectées, en utilisant une échelle de plus en plus fine.

Pour illustrer ce mode de réalisation, on considère trois périodes d'échantillonnage différentes : Te₁, par exemple égale à 3 minutes, Te₂, par exemple égale à 1 minute et Te₃, par exemple égale 15 secondes. Ces valeurs numériques ne sont données qu'à titre d'exemple.

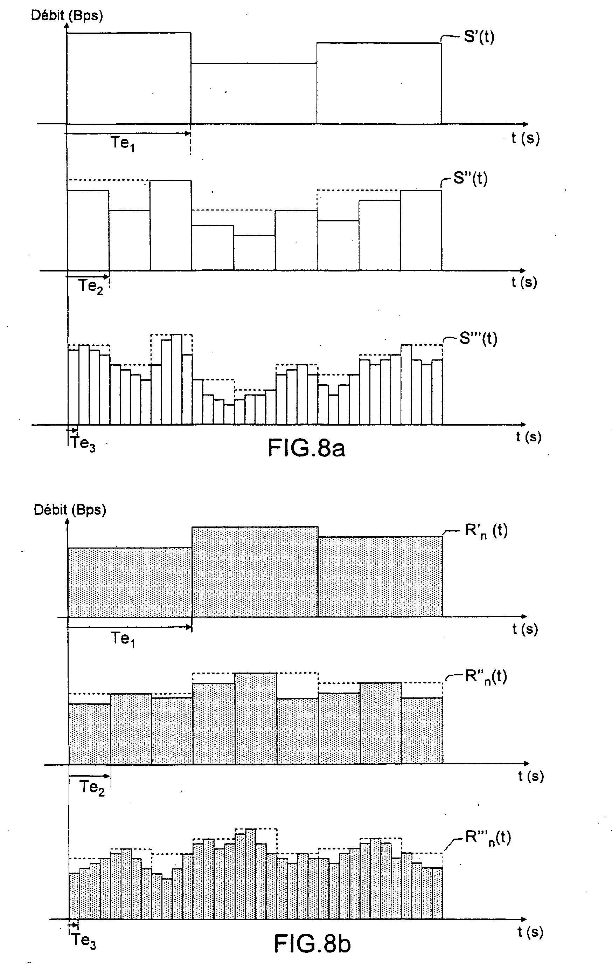

Sur la figure 8a, on a représenté les trois profils de débit S'(t), S"(t) et S"'(t) obtenus pour un multiplex en cours sur le réseau, respectivement pour chacune des périodes d'échantillonnage Te₁, Te₂, Te₃.

De même, sur la figure 8b, on a représenté les trois profils de débit Rₙ'(t), Rₙ"(t) et Rₙ"'(t) du flux demandé, obtenus respectivement pour chacune des périodes d'échantillonnage Te₁, Te₂, Te₃.

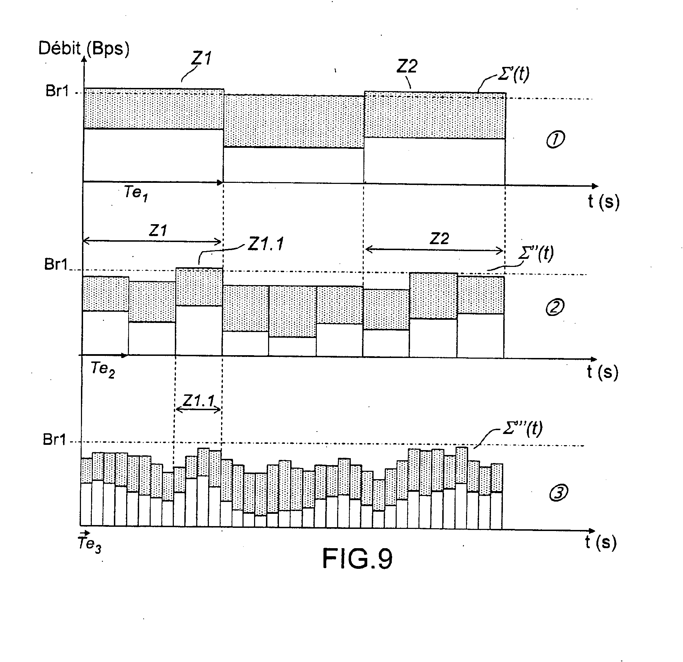

Dans chaque profil, la valeur de débit retenue pour une période d'échantillonnage donnée, est la valeur maximale des valeurs représentant la même période à un échantillonnage plus précis. Par exemple à la figure 8a, la valeur du débit du premier échantillon de Te₁ sera le maximum des valeurs des trois premiers échantillons de Te₂, ce qui correspond à la troisième valeur. La comparaison à un seuil de capacité du réseau va se faire alors en trois étapes illustrées sur la figure 9 :
- à l'étape ①, on considère l'échantillonnage le plus grossier, correspondant à une période d'échantillonnage la plus grande Te₁. C'est pour cet échantillonnage que le fichier de données correspondant comprend le moins d'échantillons. Sur chaque période, on somme les échantillons correspondants des deux profils S'(t) et Rₙ'(t), pour déterminer les zones sur lesquelles on a un dépassement du seuil Br1. On identifie dans l'exemple deux zones de dépassement potentiel Z1 et Z2 de la capacité du réseau. Il faut affiner la vérification dans ces zones Z1 et Z2. On passe à l'étape ② :

- à l'étape ②, on prend les profils S"(t) et Rₙ"(t) obtenus avec la deuxième période d'échantillonnage Te₂, plus courte. Et dans les seules zones Z1 et Z2 identifiées à l'étape 1, on somme les échantillons de ces profils et on vérifie si dans ces zones, on a des zones de dépassement du seuil Br1. Dans l'exemple illustré, on détecte ainsi dans la zone Z1, une zone Z1.1 dans laquelle on a un dépassement. Pour la zone Z2, on voit par contre qu'il n'y a en fait pas de problème de dépassement. Pour la zone Z1.1, il faut affiner la vérification en passant à l'étape ③.
- à l'étape ③, on prend les profils S"(t) et Rₙ"(t) obtenus avec la deuxième période d'échantillonnage Te₃, encore plus courte. Dans la seule zone Z1.1 identifiée à l'étape 2, on somme les échantillons de ces profils et on vérifie si dans cette zone Z1.1, on a des zones de dépassement du seuil Br1. Dans l'exemple illustré, il n'y a en fait aucun dépassement dans la zone Z1.1 identifiée. La demande pourra être acceptée.

Le procédé qui vient d'être décrit permet de réduire de manière significative le nombre de calculs à effectuer, en démarrant avec des fichiers de profils de débit comprenant un nombre réduit de valeurs, puis en affinant le traitement uniquement sur les zones détectées à risque, en faisant en quelque sorte des zooms successifs.

Si au final, on trouve une ou des zones dans lequel le seuil est dépassé et si un lisseur de débit est prévu, on va regarder si le dépassement peut être corrigé par le lisseur. Sinon on va décaler d'un cran, c'est à dire d'un pas de boucle (figure 7), le moment considéré de l'insertion du flux demandé dans le multiplex en cours, et en déduire les nouveaux profils correspondants aux différentes périodes d'échantillonnage considérées. On recommence ensuite les étapes ①, ②, ③.

A chaque fois que l'on repasse les étapes ①, ②, ③, on regarde le cas échéant, en cas de zones de dépassement, si il peut être résolu par le lisseur, sinon on décale d'un cran supplémentaire, et ainsi de suite.

En pratique, le nombre de périodes d'échantillonnage différentes utilisées est déterminé pour obtenir un bon compromis entre le temps de calcul nécessaire et la qualité de service recherché.

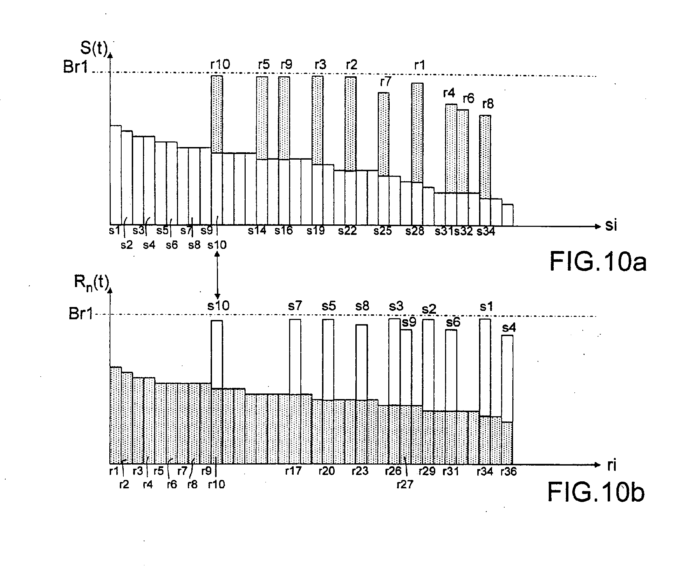

Les figures 10a et 10b montrent un autre mode de réalisation du traitement des profils de débit du multiplex et du flux demandé. Dans ce mode de réalisation, on utilise un profil de débit par flux, c'est à dire une seule période d'échantillonnage, par exemple, la seconde. L'amélioration du temps de traitement est ici obtenue par classement des échantillons par ordre de valeurs de débit décroissant, avec un temps d'échantillonnage correspondant. On applique ce classement au profil du flux demandé, en tenant compte du temps de l'instant d'insertion considéré et au profil du total des flux en cours. Pour chaque instant d'insertion considéré, l'étape de vérification de la condition de débit est alors appliquée :
- en balayant les échantillons du profil du flux demandé en commençant par le premier, et en sommant la valeur de débit d'un échantillon, avec celle de l'échantillon dans le profil du multiplex qui correspond au même temps d'échantillonnage,
- et simultanément en balayant les échantillons du profil du multiplex en commençant par le premier, et en sommant la valeur de débit d'un échantillon, avec celle de l'échantillon dans le profil du flux demandé qui correspond au même temps d'échantillonnage. Ces étapes de vérification s'arrêtent et la demande est acceptée dès que la somme des échantillons de même rang dans les profils Rₙ(t) et S(t) devient inférieure au seuil Br1, car on est alors sûr que les échantillons qui restent à considérer seront inférieurs en débit à ceux déjà considérés : leur somme sera toujours inférieure à Br1.

Si on se réfère à la figure 10a qui illustre le profil de débit S(t) d'un multiplex en cours, les échantillons s1, s2...etc sont classés par ordre de débit décroissant. De même, sur la figure 10b qui illustre le profil de débit Rₙ(t) d'un flux demandé en cours, les échantillons r1, r2...etc sont classés par ordre de débit décroissant. Les fichiers correspondants contiennent alors pour chaque échantillon, une information relative à l'instant d'échantillonnage qui lui correspond. Le procédé de traitement procède de la façon suivante :
- il va chercher le premier échantillon r1 dans le profil Rₙ(t), le somme avec l'échantillon du profil S(t) qui a le même instant d'échantillonnage, s28 dans l'exemple et compare la somme au seuil Br1; puis il va chercher le premier échantillon s1 dans le profil S(t), et le somme avec l'échantillon du profil Rₙ(t) qui a le même instant d'échantillonnage, r34 dans l'exemple et compare la somme au seuil Br1.
- puis il va chercher le deuxième échantillon r2, et le somme avec l'échantillon du profil S(t) qui a le même instant d'échantillonnage, s22 dans l'exemple et compare la somme au seuil Br1 ; puis il va chercher le deuxième échantillon s2, et le somme avec l'échantillon du profil Rₙ(t) qui a le même instant d'échantillonnage, r29 dans l'exemple et compare la somme au seuil Br1. Et ainsi de suite...
- dans le même temps, il somme deux à deux les échantillons de même rang et les compare au seuil Br1, jusqu'à atteindre le rang k pour lequel rk+sk≤Br1.

L'algorithme s'arrête là : pour les échantillons des rangs suivants, la somme croisée sera toujours inférieure ou égale à Br1. Il ne peut plus il y avoir de dépassement avec les échantillons de rang supérieur. Dans l'exemple, l'algorithme s'arrête pour k=10.

Dans l'exemple illustré sur les figures 10a et 10b, il n'y a pas de dépassement de seuil. La demande peut être admise.

Dans le cas où l'on aurait un ou plusieurs dépassements, on appliquerait les principes indiqués précédemment : si un lissage de débit est prévu, on regarde alors si pour ces dépassements on peut appliquer le lissage. Si non, on décale d'un cran le profil du flux demandé, et on relance l'algorithme de traitement. Soit on trouve un retard admissible au bout de un ou plusieurs crans (boucles), et on admet la demande en insérant le flux avec un retard correspondant, soit on ne trouve pas de retard admissible et la demande est refusée.

L'invention utilise une méthode de vérification basée sur une différence de profils. Par exemple, selon cette méthode, pour vérifier si on peut transmettre un flux demandé à un instant donné :
- on calcule la différence entre un profil correspondant au débit maximum (ou capacité du réseau de distribution) et le profil S(t) correspondant au débit total de l'ensemble des flux en cours;
- puis, pour chaque instant d'insertion possible, on vérifie si le profil de débit du flux correspondant à la demande est inférieur ou égal à la différence calculée.

Dans une variante, on peut effectuer une étape de recherche du meilleur ou des meilleurs candidats pour le décalage. Ainsi, selon cette variante, on peut effectuer une intercorrélation entre un profil différence, c'est à dite la bande passante disponible (différence entre un profil correspondant au débit maximum (ou capacité du réseau de distribution) et le profil correspondant au débit total de l'ensemble des flux en cours) et le profil de débit du flux correspondant à la demande. On choisit alors un temps d'insertion correspondant au maximum d'intercorrélation. On rappelle que delon la définition mathématique, une fonction d'intercorrélation g entre deux fonctions f1 et f2 est un produit scalaire des deux fonctions f1 et f2 pour toutes les valeurs du décalage u possible: g(u) = ∫f1(t).f2(t-u) du. Ici, il s'agit d'effectuer l'opération d'intercorrélation sur un ensemble discret d'échantillons (somme discrète) et de calculer l'intercorrélation pour une ou plusieurs valeurs de décalage. Le ou les plus grandes valeurs d'intercorrélation correspond ou correspondent à la ou aux valeurs de décalages qui sont à tester en priorité pour la vérification de la condition d'insertion du flux demandé.

Des variantes de ces modes de réalisation peuvent être appliquées qui ne sortent pas du cadre de l'invention. Notamment, pour un contenu multimédia donné on peut pré-calculer les profils associés à des fonctionnalités du service : avance ou retour rapide ; mettre à jour les profils associés à l'activation du mode pause.... Quelle que soit la méthode utilisée, la détermination d'un instant d'insertion admissible ou optimum doit être faite avant que cet instant soit dépassé. Ainsi la méthode choisie sera plus ou moins performante selon les capacités des ressources de traitement du contrôleur.

## Revendications

1. Procédé de gestion d'une demande d'accès à distance à un contenu multimédia (Vj) parmi une pluralité de contenus multimédias fournis par un serveur (4) sous forme de flux de données numériques, permettant une émission (6) d'un ensemble de flux de données fournis par ledit serveur (4) vers un réseau de distribution (1) en fonction d'un seuil (Br1) de capacité dudit réseau de distribution, lesdits flux de données numériques étant du type à débit variable, au moins un profil de débit de données étant associé à chaque flux, et en ce que pour au moins une partie des demandes d'accès à distance reçues, le procédé de gestion comprend une étape de détermination d'au moins un instant d'insertion d'un flux de données (VBRₙ) correspondant à une demande reçue, en fonction d'un premier profil de débit (S(t)) correspondant à l'ensemble des flux en cours, et d'un deuxième profil de débit correspondant au profil de débit (Rₙ(t)) associé au flux correspondant à ladite demandes, ledit instant d'insertion pouvant correspondre à une insertion instantanée du flux demandé, ou une insertion retardée
et dans lequel une étape de détermination d'au moins un instant d'insertion comprend une vérification d'au moins une première condition sur une fenêtre temporelle d'insertion correspondante, définie depuis un premier instant d'insertion associé à une durée correspondant à un temps de diffusion (Tn) du flux demandé, l'instant d'insertion étant choisi en fonction du résultat de la vérification, la première condition étant satisfaite si le débit de données total correspondant à la somme desdits premier et deuxième profils est inférieur ou égal au dit seuil (Br1) de capacité du réseau (1), **caractérisé en ce que** :
- ladite vérification est basée sur un calcul d'un profil différence entre ledit premier profil et un débit maximum sur ledit réseau, et
- un calcul d'une fonction d'intercorrélation est effectué entre ledit profil différence et ledit deuxième profil, en considérant différents instants d'insertion, et une recherche du ou des maxima d'intercorrélation est effectuée.

2. Procédé de gestion selon la revendication 1, dans lequel ledit instant d'insertion correspond à une insertion instantanée du flux demandé.

3. Procédé de gestion selon l'une des revendications 1 ou 2, comprenant une étape de sélection d'un instant d'insertion parmi une pluralité d'instants d'insertion vérifiant ladite première condition (Br1), sur la base de la vérification d'une condition de débit plus contraignante (Br2).

4. Procédé de gestion selon l'une des revendications 1 à 3, dans lequel un lissage (8) de débit de données est prévu entre l'émetteur (6) et le réseau de distribution (1), **caractérisé en ce que** ladite première condition est appliquée avec une tolérance de dépassement du seuil (Br1), fonction de la durée et de la hauteur dudit dépassement.

5. Procédé selon la revendication 1 ou 2, dans lequel, à chaque flux de données, on associe au moins un profil de débit de données obtenu par échantillonnage, la valeur d'un échantillon étant égal au débit maximum trouvé sur la période d'échantillonnage correspondante.

6. Procédé selon la revendication 5, dans lequel pour chaque flux de données, on élabore une pluralité de profils de débit, chacun correspondant à une période d'échantillonnage déterminée, donnant une pluralité d'échelles de profil de débit, une première échelle correspondant à une période la plus longue, jusqu'à une dernière échelle correspondant à une période la plus courte, et dans l'étape de détermination d'un instant d'insertion, pour un instant d'insertion donné :
-a) on sélectionne les premier et deuxième profils dans la première échelle, et on lance la dite étape de vérification de la première condition, sur la largeur du deuxième profil et si la première condition n'est pas vérifiée, on applique la boucle suivante :
-b) on identifie les zones temporelles (Z1, Z2) sur lesquelles ladite condition n'est pas vérifiée, on sélectionne les premier et deuxième profils dans l'échelle suivante, et on lance ladite étape de vérification de la première condition, sur lesdites zones temporelles identifiées,
les étapes a) et b) étant appliquées jusqu'à la dernière échelle ou jusqu'à ce que la première condition soit vérifiée sur chacune desdites zones.

7. Procédé selon la revendication 5, dans lequel les échantillons d'un profil sont classés par ordre de valeurs de débit décroissant, avec un temps d'échantillonnage correspondant, ledit temps d'échantillonnage tenant compte d'un instant d'insertion considéré pour les échantillons du profil du flux demandé, et pour ledit instant d'insertion considéré, l'étape de vérification de ladite première condition est appliquée :
- en balayant les échantillons du deuxième profil en commençant par le premier, et en sommant la valeur de débit d'un échantillon, avec celle de l'échantillon dans le premier profil qui correspond au même temps d'échantillonnage,
- simultanément en balayant les échantillons du premier profil en commençant par le premier, et en sommant la valeur de débit d'un échantillon, avec celle de l'échantillon dans le deuxième profil qui correspond au même temps d'échantillonnage,
et la demande est acceptée dès que la somme des échantillons de même rang desdits premier et deuxième profils devient inférieure au dit seuil (Br1) du réseau.

8. Procédé selon l'une quelconque des revendications précédentes,
**caractérisé en ce qu'**il est appliqué à chacune des demandes d'accès reçues.

9. Appareil (7) connectable à un réseau de distribution (1) d'un système de diffusion de contenus multimédia à la demande fournis par un serveur multimédia (4) sous forme de flux de données numériques à débit variable, ledit appareil comprenant des ressources mémoire (73) pour stocker des profils de débit des dits flux de données, et des ressources de traitement numériques (71, 72) aptes à mettre en oeuvre un algorithme de détermination d'un instant d'insertion d'un nouveau flux de données numériques (VBRₙ) correspondant à une demande d'accès à un contenu multimédia, à un ensemble de flux de données en cours de diffusion sur le dit réseau, à partir des profils de débit Rₙ(t) dudit nouveau flux et desdits flux de données en cours
et dans lequel lesdites ressources de traitement numériques sont aptes à mettre en oeuvre une détermination d'au moins un instant d'insertion, qui comprend une vérification d'au moins une première condition sur une fenêtre temporelle d'insertion correspondante, définie depuis un premier instant d'insertion associé à une durée correspondant à un temps de diffusion (Tn) du flux demandé, l'instant d'insertion étant choisi en fonction du résultat de la vérification, la première condition étant satisfaite si le débit de données total correspondant à la somme desdits premier et deuxième profils est inférieur ou égal au dit seuil (Br1) de capacité du réseau (1), **caractérisé en ce que** ledit appareil comprend des moyens de :
- calcul d'un profil différence entre ledit premier profil et un débit maximum sur ledit réseau pour effectuer ladite vérification, et
- calcul d'une fonction d'intercorrélation, effectué entre ledit profil différence et ledit deuxième profil, en considérant différents instants d'insertion, et de recherche du ou des maxima d'intercorrélation.

10. Système de diffusion de contenus multimédia à la demande comprenant un appareil de contrôle (7) selon la revendication 9 et un serveur (4) de contenus multimédia (Vₙ) sous forme de flux de données numériques à débit variable (VBRₙ), dans lequel des profils de débit Rn(t) correspondants aux dits flux de données sont stockés dans le serveur (4) au moment de l'encodage des contenus multimédia par lequel lesdits flux de données sont générés, et lesdits profils sont transmis par le serveur pour être mémorisés dans ledit appareil.

11. Système de diffusion de contenus multimédia selon la revendication 10, **caractérisé en ce que** ledit appareil (7) est intégré dans ledit serveur (4).

## Claims

1. Method of management of a request for remote access to a multimedia content (Vj) from among a plurality of multimedia contents provided by a server (4) in digital data stream form, allowing a transmission (6) of a set of data streams provided by said server (4) to a distribution network (1) as a function of a capacity threshold (Br1) of said distribution network, said digital data streams being of the variable-throughput type, at least one data throughput profile being associated with each stream, and in that for at least part of the remote access requests received, the method of management comprises a step of determination of at least one instant of insertion of a data stream (VBRₙ) corresponding to a request received, as a function of a first throughput profile (S(t)) corresponding to the set of streams in progress, and of a second throughput profile corresponding to the throughput profile (Rₙ(t)) associated with the stream corresponding to said request, said instant of insertion being able to correspond to an instantaneous insertion of the requested stream, or a delayed insertion,
in which a step of determination of at least one instant of insertion comprises a verification of at least one first condition over a corresponding insertion time window, defined from a first instant of insertion associated to a duration corresponding to a transmission time (Tn) of the requested stream, the instant of insertion being chosen as a function of a result of said verification, the first condition being satisfied if the total data throughput corresponding to the sum of said first and second profiles is less than or equal to said capacity threshold (Br1) of the network (1), **characterized in that**:
- said verification is based on a calculation of a difference profile between said first profile and a maximum throughput on said network, and
- a calculation of a cross-correlation function is performed between said difference profile and said second profile, by considering various instants of insertion, and a search for cross-correlation maximum or maxima is performed.

2. Method of management according to claim 1, in which said instant of insertion corresponds to an instantaneous insertion of the requested stream.

3. Method of management according to one of Claims 1 or 2, comprising a step of selecting an instant of insertion from among a plurality of instants of insertion satisfying said first condition (Br1), on the basis of the satisfaction of a more constraining throughput condition (Br2).

4. Method of management according to one of Claims 1 to 3, in which a data throughput smoothing (8) is envisaged between the transmitter (6) and the distribution network (1), **characterized in that** said first condition is applied with an overshoot tolerance of the threshold (Br1), dependent on the duration and the height of said overshoot.

5. Method according to Claims 1 or 2, in which, with each data stream, is associated at least one data throughput profile obtained by sampling, the value of a sample being equal to the maximum throughput found over the corresponding sampling period.

6. Method according to Claim 5, in which for each data stream, a plurality of throughput profiles is formulated, each corresponding to a determined sampling period, giving a plurality of throughput profile scales, a first scale corresponding to a longest period, until a last scale corresponding to a shortest period, and in the step of determination of an instant of insertion, for a given instant of insertion:
-a) the first and second profiles in the first scale are selected, and said step of verifying the first condition is instigated on the width of the second profile and if the first condition is not satisfied, the following loop is applied:
-b) the time zones (Z1, Z2) on which said condition is not satisfied are identified, the first and second profiles are selected in the following scale, and said step of verifying the first condition is instigated on said identified time zones,
steps a) and b) being applied until the last scale or until the first condition is satisfied on each of said zones.

7. Method according to Claim 5, in which the samples of a profile are ranked in decreasing order of throughput values, with a corresponding sampling time, said sampling time taking account of a relevant instant of insertion for the samples of the profile of the requested stream, and for said relevant instant of insertion, the step of verifying said first condition is applied:
- by scanning the samples of the second profile, beginning with the first, and by summing the throughput value of a sample, with that of the sample in the first profile which corresponds to the same sampling time,
- simultaneously by scanning the samples of the first profile, beginning with the first, and by summing the throughput value of a sample, with that of the sample in the second profile which corresponds to the same sampling time,
and the request is accepted as soon as the sum of the samples of the same rank of said first and second profiles becomes less than said threshold (Br1) of the network.

8. Method according to any one of the preceding claims, **characterized in that** it is applied to each of the access requests received.

9. Apparatus (7) connectable to a distribution network (1) of a system for transmitting multimedia contents on demand provided by a multimedia server (4) in the form of variable-throughput digital data streams, said apparatus comprising memory resources (73) for storing throughput profiles of said data streams, and digital processing resources (71, 72) able to implement an algorithm of determination of an instant of insertion of a new digital data stream (VBRₙ) corresponding to a request for access to a multimedia content, to a set of data streams being transmitted on said network, on the basis of the throughput profiles Rₙ(t) of said new stream and of said data streams in progress,
and in which said digital processing resources are able to determine at least one instant of insertion, that comprises a verification of at least one first condition over a corresponding insertion time window, defined from a first instant of insertion associated to a duration corresponding to a transmission time (Tn) of the requested stream, the instant of insertion being chosen as a function of the result of the verification, the first condition being satisfied when the total data throughput corresponding to the sum of said first and said second profiles is less than or equal to said capacity threshold (Br1) of the network (1), **characterized in that** said apparatus comprises means for:
- a calculation of a difference profile between said first profile and a maximum throughput on said network, and
- a calculation of a cross-correlation function, performed between said difference profile and said second profile, by considering various instants of insertion, and a search for cross-correlation maximum or maxima.

10. System for transmitting multimedia contents on demand comprising a control apparatus (7) according to Claim 9 and a server (4) of multimedia contents (Vₙ) in the form of variable-throughput digital data streams (VBRₙ), in which throughput profiles Rn(t) corresponding to said data streams are stored in the server (4) at the time of the encoding of the multimedia contents by which said data streams are generated, and said profiles are transmitted by the server so as to be stored in said apparatus.

11. System for transmitting multimedia contents according to Claim 10, **characterized in that** said apparatus (7) is integrated into said server (4).

## Patentansprüche

1. Verfahren zur Verwaltung einer Fernzugriffsanforderung auf einen Multimedia-Inhalt (Vⱼ) aus einer Vielzahl von Multimedia-Inhalten, die von einem Server (4) in Form von digitalen Datenströmen geliefert werden, das ein Senden (6) einer Gruppe von von dem Server (4) gelieferten Datenströmen an ein Verteilernetz (1) in Abhängigkeit von einer Kapazitätsschwelle (Br1) des Verteilernetzes ermöglicht, wobei die digitalen Datenströme vom Typ mit variabler Übertragungsrate sind, wobei jedem Strom mindestens ein Datenübertragungsratenprofil zugeordnet ist, und dass das Verwaltungsverfahren für mindestens einen Teil der empfangenen Fernzugriffsanforderungen einen Schritt der Bestimmung mindestens eines Einfügungszeitpunkts eines Datenstroms (VBRₙ) entsprechend einer empfangenen Anforderung in Abhängigkeit von einem ersten Übertragungsratenprofil (S(t)) entsprechend der Gesamtheit der laufenden Datenströme und von einem zweiten Übertragungsratenprofil entsprechend dem Übertragungsratenprofil (Rₙ(t)) aufweist, das dem der Anforderung entsprechenden Strom zugeordnet ist, wobei der Einfügungszeitpunkt einer augenblicklichen Einfügung des angeforderten Stroms oder einer verzögerten Einfügung entsprechen kann,
und bei dem ein Schritt der Bestimmung mindestens eines Einfügungszeitpunkts eine Verifizierung mindestens einer ersten Bedingung in einem entsprechenden Einfügungszeitfenster aufweist, das ausgehend von einem ersten Einfügungszeitpunkt definiert wird, der einer Dauer entsprechend einer Verbreitungszeit (Tn) des angeforderten Stroms zugeordnet ist, wobei der Einfügungszeitpunkt in Abhängigkeit von dem Ergebnis der Verifizierung ausgewählt wird, wobei die erste Bedingung erfüllt ist, wenn die Gesamtdatenübertragungsrate entsprechend der Summe des ersten und des zweiten Profils geringer als die oder gleich der Kapazitätsschwelle (Br1) des Netzes (1) ist,
**dadurch gekennzeichnet, dass**:
- die Verifizierung auf einer Berechnung eines Differenzprofils zwischen dem ersten Profil und einer maximalen Übertragungsrate in dem Netz basiert, und
- eine Berechnung einer Interkorrelationsfunktion zwischen dem Differenzprofil und dem zweiten Profil durchgeführt wird, indem verschiedene Einfügungszeitpunkte berücksichtigt werden, und eine Suche des oder der Interkorrelationsmaxima durchgeführt wird.

2. Verwaltungsverfahren nach Anspruch 1, bei dem der Einfügungszeitpunkt einer augenblicklichen Einfügung des angeforderten Stroms entspricht.

3. Verwaltungsverfahren nach einem der Ansprüche 1 oder 2, das einen Schritt der Auswahl eines Einfügungszeitpunkts aus einer Vielzahl von Einfügungszeitpunkten, die die erste Bedingung (Br1) verifizieren, auf der Basis der Verifizierung einer zwingenderen Übertragungsraten-Bedingung (Br2) aufweist.

4. Verwaltungsverfahren nach einem der Ansprüche 1 bis 3, bei dem eine Glättung (8) einer Datenübertragungsrate zwischen dem Sender (6) und dem Verteilernetz (1) vorgesehen ist, **dadurch gekennzeichnet, dass** die erste Bedingung mit einer Überschreitungstoleranz der Schwelle (Br1) angewendet wird, die von der Dauer und der Höhe der Überschreitung abhängt.

5. Verfahren nach Anspruch 1 oder 2, bei dem jedem Datenstrom mindestens ein durch Abtasten erhaltenes Datenübertragungsratenprofil zugeordnet wird, wobei der Wert einer Tastprobe gleich der maximalen Übertragungsrate ist, die in der entsprechenden Abtastperiode gefunden wurde.

6. Verfahren nach Anspruch 5, bei dem für jeden Datenstrom mehrere Übertragungsratenprofile erarbeitet werden, die je einer bestimmten Abtastperiode entsprechen, was zu mehreren Übertragungsratenprofil-Skalen führt, einer ersten Skala, die einer längsten Periode entspricht, bis zu einer letzten Skala, die einer kürzesten Periode entspricht, und im Schritt der Bestimmung eines Einfügungszeitpunkts für einen gegebenen Einfügungszeitpunkt:
-a) das erste und das zweite Profil in der ersten Skala ausgewählt werden, und der Schritt der Verifizierung der ersten Bedingung über die Breite des zweiten Profils gestartet wird, und wenn die erste Bedingung nicht verifiziert ist, die folgende Schleife angewendet wird:
-b) es werden die Zeitzonen (Z1, Z2) identifiziert, in denen die Bedingung nicht verifiziert ist, es werden das erste und das zweite Profil in der folgenden Skala ausgewählt, und es wird der Schritt der Verifizierung der ersten Bedingung in den identifizierten Zeitzonen gestartet,
wobei die Schritte a) und b) bis zur letzten Skala, oder bis die erste Bedingung in jeder der Zonen verifiziert ist, angewendet werden.

7. Verfahren nach Anspruch 5, bei dem die Tastproben eines Profils in der abnehmenden Reihenfolge von Übertragungsratenwerten mit einer entsprechenden Abtastzeit eingeordnet werden, wobei die Abtastzeit einen für die Tastproben des angeforderten Stroms betrachteten Einfügungszeitpunkt berücksichtigen, und für den betrachteten Einfügungszeitpunkt der Schritt der Verifizierung der ersten Bedingung angewendet wird:
- indem die Tastproben des zweiten Profils abgetastet werden, indem mit der ersten begonnen wird, und indem der Übertragungsratenwert einer Tastprobe mit demjenigen der Tastprobe im ersten Profil summiert wird, die der gleichen Abtastzeit entspricht,
- gleichzeitig, indem die Tastproben des ersten Profils abgetastet werden, indem mit der ersten begonnen wird, und indem der Übertragungsratenwert einer Tastprobe mit demjenigen der Tastprobe im zweiten Profil summiert wird, die der gleichen Abtastzeit entspricht,
und die Anforderung akzeptiert wird, sobald die Summe der Tastproben gleichen Rangs des ersten und des zweiten Profils unter der Schwelle (Br1) des Netzes liegt.

8. Verfahren nach einem der vorhergehenden Ansprüche, **dadurch gekennzeichnet, dass** es auf jede der empfangenen Zugriffsanforderungen angewendet wird.

9. Gerät (7), das mit einem Verteilernetz (1) eines Systems zur Verbreitung von Multimedia-Inhalten auf Anforderung verbunden ist, die von einem Multimedia-Server (4) in Form von digitalen Datenströmen mit variabler Übertragungsrate geliefert werden, wobei das Gerät Speicherressourcen (73), um Übertragungsratenprofile der Datenströme zu speichern, und Datenverarbeitungsressourcen (71, 72) aufweist, die fähig sind, einen Algorithmus zur Bestimmung eines Einfügungszeitpunkts eines neuen digitalen Datenstroms (VBRₙ), der einer Zugriffsanforderung auf einen Multimedia-Inhalt entspricht, an eine Gruppe von Datenströmen, die gerade im Netz verteilt werden, ausgehend von den Übertragungsratenprofilen Rₙ(t) des neuen Stroms und der laufenden Datenströme anzuwenden, und bei dem die Datenverarbeitungsressourcen fähig sind, eine Bestimmung mindestens eines Einfügungszeitpunkts anzuwenden, die eine Verifizierung mindestens einer ersten Bedingung in einem entsprechenden Einfügezeitfenster enthält, das ausgehend von einem ersten Einfügungszeitpunkt definiert wird, der einer Dauer zugeordnet ist, die einer Verbreitungszeit (Tn) des angeforderten Stroms entspricht, wobei der Einfügungszeitpunkt in Abhängigkeit vom Ergebnis der Verifizierung ausgewählt wird, wobei die erste Bedingung erfüllt ist, wenn die gesamte Datenübertragungsrate entsprechend der Summe des ersten und des zweiten Profils geringer als oder gleich der Kapazitätsschwelle (Br1) des Netzes (1) ist, **dadurch gekennzeichnet, dass** das Gerät Mittel aufweist:
- zur Berechnung eines Differenzprofils zwischen dem ersten Profil und einer maximalen Übertragungsrate in dem Netz, um die Verifizierung durchzuführen, und
- zur Berechnung einer Interkorrelationsfunktion, die zwischen dem Differenzprofil und dem zweiten Profil durchgeführt wird, unter Berücksichtigung verschiedener Einfügungszeitpunkte, und zur Suche nach dem oder den Interkorrelationsmaxima.

10. System zur Verbreitung von Multimedia-Inhalten auf Anforderung, das ein Prüfgerät (7) nach Anspruch 9 und einen Server (4) von Multimedia-Inhalten (Vₙ) in Form von digitalen Datenströmen mit variabler Übertragungsrate (VBRₙ) aufweist, bei dem Übertragungsratenprofile Rn(t) entsprechend den Datenströmen im Server (4) im Zeitpunkt der Codierung der Multimedia-Inhalte gespeichert werden, durch die die Datenströme erzeugt werden, und die Profile vom Server übertragen werden, um im Gerät gespeichert zu werden.

11. System zur Verbreitung von Multimedia-Inhalten nach Anspruch 10, **dadurch gekennzeichnet, dass** das Gerät (7) in den Server (4) integriert ist.
